# EUROPÄISCHE PATENTSCHRIFT

(11) **EP 0 721 030 B1**
(45) Veröffentlichungstag und Bekanntmachung des Hinweises auf die Patenterteilung: **29.04.1998**
(21) Anmeldenummer: 95120645.7
(22) Anmeldetag: 28.12.1995
(51) Int. Cl.: E02D 5/76

(54) **Verfahren zum Erzeugen einer Sollbruchstelle an einem Zugglied für einen Verpressanker**
Method to make a rupture zone in a tension member for a prestressed ground anchor
Procédé pour générer une zone de rupture pour une barre de tension d'un tirant d'ancrage

(30) Priorität: 04.01.1995 DE 19500091
(43) Veröffentlichungstag der Anmeldung: 10.07.1996
(73) Patentinhaber: DYCKERHOFF & WIDMANN AG, 81902 München (DE)
(72) Erfinder:
(74) Vertreter: Patentanwälte Möll und Bitterich

(56) Entgegenhaltungen:
- EP-A- 0 583 725
- CH-A- 603 919
- CH-A- 671 057
- CH-A- 681 835
- DE-A- 3 400 350
- FR-A- 2 274 740

## Beschreibung

Die Erfindung betrifft ein Verfahren zum Erzeugen einer Sollbruchstelle an einer vorbestimmten Stelle eines Zugglieds für einen Verpreßanker gemäß dem Oberbegriff des Patentanspruchs 1.

Ein Verpreßanker besteht aus einem Zugglied aus einem einzigen oder mehreren Stahlstäben, Stahldrähten oder Stahldrahtlitzen, das in ein Bohrloch eingeführt und im Bohrlochtiefsten durch Einpressen von erhärtendem Material, wie Zementmörtel oder dergleichen, mit der Bohrlochwandung und so mit dem umgebenden Boden in Verbund gebracht wird. Ein so hergestellter Verpreßkörper wird über den restlichen, innerhalb einer rohrförmigen Umhüllung verlaufenden und frei dehnbaren Teil des Zuggliedes mit dem zu verankernden Bauteil kraftschlüssig verbunden. Die Länge des Zuggliedes, über die es im Verpreßkörper eingebettet ist, nennt man Verankerungslänge Lᵥ, den restlichen, zum Zwecke der Vorspannung frei dehnbaren Teil freie Stahllänge L_{f}.

Verpreßanker können zur dauernden Verankerung von Bauwerken im Boden dienen, aber auch temporär eingesetzt werden, wie z.B. zur rückwärtigen Verankerung einer Baugrubenwand. Wenn sich ein temporär eingesetzter Verpreßanker bis in ein Nachbargrundstück erstreckt, muß er in aller Regel nach Beendigung der Bauarbeiten, für die er eingesetzt wurde, entfernt werden.

Zur Entfernung eines Verpreßankers wird zumeist am Übergang der Verankerungslänge Lᵥ zur freien Stahllänge L_{f} eine Trennmöglichkeit für das Zugglied vorgesehen, um so den freien Teil des Zuggliedes aus dem Bohrloch herausziehen und gegebenenfalls wiedergewinnen zu können. Der Verpreßkörper selbst, der selten eine größere Länge als etwa 4 bis 8 m aufweist, verbleibt dann im Untergrund. Bekannt sind jedoch auch auf die ganze Länge entfernbare Temporäranker. Bei solchen wird die Kraft am unteren Ende des Zuggliedes auf ein Verankerungselement abgegeben und von diesem über Druck in den Verpreßkörper eingeleitet.

Zum Durchtrennen des Zugglieds eines Verpreßankers an einer vorbestimmten Stelle gibt es viele Möglichkeiten, von denen aber nur zwei in der Praxis angewendet werden. Zum einen wird das Zugglied an der betreffenden Stelle schon vor dem Einbau im Sinne einer Sollbruchstelle geschwächt, zum anderen wird das Zugglied beim Einbau an der vorgesehenen Trennstelle mit einer Vorrichtung versehen, mit deren Hilfe es nach Einbau und Gebrauch geschwächt werden kann, um in beiden genannten Fällen zum Ausbau durch überspannen einen Bruch hervorzurufen.

Eine Schwächung des Zugglieds vor dem Einbau wird durch eine Verringerung des Stahlquerschnitts auf mechanischem Wege, z.B. durch Einkerben, erreicht. Durch Aufbringen einer bestimmten Zugkraft, der Abreißkraft, reißt dann das Zugglied an der geschwächten Stelle. Bei Anwendung dieses Verfahrens besteht die Gefahr, daß bei Auftreten erhöhter äußerer Lasten der Anker durch die Kerbwirkung ohne ausgeprägtes Dehnverhalten und somit ohne Vorankündigung versagt. Um dem Rechnung zu tragen, sind bei der Bemessung erhöhte Sicherheitsbeiwerte nötig, die zu einer Überdimensionierung des Verpreßankers führen. Eine weitere Abminderung der Ausnutzbarkeit des Stahles wird wegen der verfahrensbedingt schwer kontrollierbaren Streuung der Abreißkraft erforderlich, ohne daß jedoch der Mangel der nicht vorhandenen Duktilität ausgeglichen werden kann.

Aus der CH 671 057 A5 ist auch bekannt, bei einem aus Stahldrahtlitzen bestehenden Zugglied eine Sollbruchstelle dadurch zu erzeugen, daß an der vorbestimmten Stelle der Zentraldraht und gegebenenfalls auch Außendrähte vollständig durchtrennt werden, um sie anschließend mittels einer Preßmuffe wieder zu verbinden. Durch Aufbringen der Abreißkraft versagen die Preßmuffe und die restlichen Außendrähte, so daß die freie Stahllänge L_{f} des Zuggliedes ausgebaut werden kann. Die relative Lage der Trennstelle der Drähte zur Muffe soll dabei die Größe der aufzubringenden Abreißkraft steuern. Nachteile dieses Verfahrens sind, daß die Litze zum Durchtrennen des Zentraldrahtes gespreizt werden muß und daß die Abreißkraft nur tendenziell und somit in nicht befriedigender Weise vorausbestimmbar ist.

Verfahren zum nachträglichen Ausbau der freien Stahllänge L_{fSt} eines Zuggliedes, nachdem der Anker nicht mehr benötigt wird, basieren hauptsächlich auf Verringerung der Festigkeit oder sogar Durcht rennen des Zuggliedes unter Einwirkung von Wärme. So ist es aus der FR 22 74 740 bekannt, die dafür notwendige Energie durch eine chemisch exotherme Reaktion, z.B. durch Entzünden eines aluminothermischen Gemisches, zu erzeugen. Gemäß der CH 681 835 A5 erfolgt die Wärmezufuhr über Induktion mit Hilfe einer Spule. Dabei wird das Zugglied vor dem Einbringen in das Bohrloch mit einer Spule versehen, die es an der vorbestimmten Stelle umschließt. Soll die freie Stahllänge L_{f} des Zuggliedes nach Gebrauch des Ankers wieder ausgebaut werden, so beaufschlagt man die Spule mit elektrischem Strom. Durch Induktion wird an der bestimmten Stelle im Stahl Wärme erzeugt, wodurch die Festigkeit des Zuggliedes so weit herabgesetzt wird, daß es unter der Gebrauchslast an der betreffenden Stelle reißt.

Die Nachteile dieser Verfahren resultieren vor allem daraus, daß die zum Herbeiführen einer Trennung des Zuggliedes benötigte Vorrichtung in das Bohrloch eingeführt werden muß. Dies kann über die gesamte Länge des Bohrlochs einen größeren Durchmesser erfordern. Weiter kann die Vorrichtung beim Einbau des Ankers beschädigt oder während der Einsatzzeit des Ankers durch äußere Einflüsse, wie z.B. Feuchtigkeit, Korrosion, Druck etc. funktionsuntüchtig werden, so daß eine Festigkeitsminderung des Zugglieds an der vorbestimmten Stelle im Nachhinein nicht zuverlässig möglich ist. Außerdem sind diese Vorrichtungen nur einmalig zu gebrauchen.

Vor diesem Hintergrund liegt der Erfindung die Aufgabe zugrunde, ein Verfahren anzugeben, um unter Vermeidung der oben genannten Nachteile auf einfache und zuverlässige Weise eine Sollbruchstelle an einer vorbestimmten Stelle eines Stahlzugglieds erzeugen zu können.

Gemäß der Erfindung wird diese Aufgabe durch ein Verfahren mit den im Anspruch 1 angegebenen Merkmalen , und durch ein Zugglied mit den im Anspruch 11 angegebenen Merkmalen gelöst.

Vorteilhafte Weiterbildungen ergeben sich aus den Unteransprüchen.

Zugglieder von Verpreßankern bestehen meist aus Stahldrahtlitzen, also aus kaltverfestigten Stählen. Bei der Kaltverfestigung von Stählen kommt es unter Einwirkung von äußeren Kräften zu einer plastischen Verformung unterhalb der Rekristallisationstemperatur des Stahls, wobei die Metallkristalle auf Gitterebenen gleiten. Die dabei auftretenden Gitterstörungen werden Versetzungen genannt.

Dieses Verhalten macht man sich bei der Herstellung von Drähten und Stäben zunutze, wenn man sie bei Raumtemperatur durch eine Ziehdüse zieht und/oder reckt. Durch die damit einhergehende Querschnittsverminderung des Drahtes oder Stabes wird infolge einer Erhöhung der Versetzungsdichte eine Steigerung der Zugfestigkeit und Streckgrenze erreicht. Das Metall befindet sich dabei in einem Zwangszustand. Durch Zufuhr von Wärme wird dieser Zwangszustand je nach Höhe der Temperatur teilweise oder auch vollständig aufgehoben; es kommt zur Kristallerholung und damit zum Abfall von Streckgrenze und Festigkeit bei gleichzeitiger Erhöhung der Duktilität.

Nach der Erfindung wird diese physikalische Gesetzmäßigkeit ausgenützt, indem das betreffende Zugglied an der vorgesehenen Stelle punktuell einer kontrollierten Erwärmung ausgesetzt wird. Damit ist es möglich, bereits vor dem Einbau des Zugglieds ohne Verminderung seines Querschnitts eine Sollbruchstelle zu schaffen, an der das Zugglied bei Aufbringen einer die Gebrauchslast übersteigenden Zugkraft, bei der ursprünglichen Bruchlast oder bei einer zwischen Elastizitätsgrenze und Bruchlast liegenden Last zuverlässig reißt. Durch Wahl und Kontrolle der Temperatur der Wärmebehandlung kann die Abreißkraft sehr genau bis zu Festigkeitswerten eines unbehandelten Stahles eingestellt werden.

Für die Wärmebehandlung besonders geeignet erscheint das Verfahren der elektrischen Induktion, bei der das Zugglied in eine Spule eingeführt wird und sich dort im Sinne der kurzgeschlossenen Wicklung eines Transformators erwärmt, wenn die Spule mit einem geeigneten mittel- bis hochfrequenten Strom beaufschlagt wird. Der Umstand, daß sowohl Querschnitt und Geometrie der Spule als auch Frequenz, Spannung und Stärke des Stromes sowie die Aufheizdauer in engen und gut kontrollierbaren Grenzen auf den Querschnitt des Zuggliedes abgestimmt werden können, erlaubt eine sehr feinfühlige Steuerung der Erwärmung des Stahles im behandelten Bereich.

Erfindungsgemäß kann die Abreißkraft entsprechend den jeweiligen Erfordernissen zwischen der ursprünglichen Bruchlast und Elastizitätsgrenze exakt eingestellt werden. Dies erlaubt es, den Verpreßanker im Gebrauchszustand voll auszunutzen, da sich ein Versagen des Ankers durch eine bestimmte Mindestverformung ankündigt.

Durch die Wärmebehandlung des Zugglieds vor dem Einbau entfallen jegliche Vorrichtungen, die zum nachträglichen Schwächen oder Trennen des Zugglieds mit dem Anker eingebaut werden müßten.

Da die Erfindung Vorgänge ausnützt, die auf der Kristallstruktur von Metallen beruhen, ist sie nicht auf die alleinige Anwendung bei kaltverfestigten Stählen beschränkt. Ihr Vorteil besteht vielmehr in der Anwendbarkeit auf die unterschiedlichsten Ankertypen, Stahlgüten und Stahlsorten. Voraussetzung ist lediglich, daß sich die Stähle nicht im thermodynamischen Gleichgewichtszustand befinden. Dazu gehören zwar kaltverfestigte Stähle, aber auch Stähle, die in die Bainit- und Martensitstufe bzw. über die Martensitstufe umgewandelt sind.

Die Erfindung wird nachstehend anhand eines in der Zeichnung dargestellten Ausführungsbeispiels erläutert. Es zeigt
- Fig. 1: einen Längsschnitt durch einen Verpreßanker und
- Fig. 2: das Kraft-Verlängerungs-Diagramm eines Zugglieds gemäß der Erfindung.

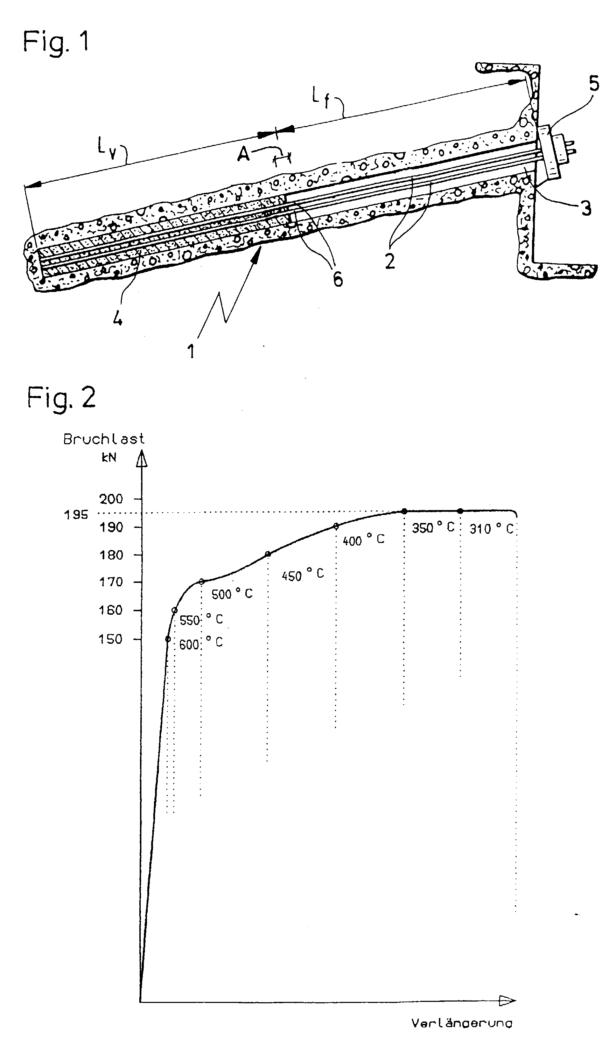

Fig. 1 zeigt einen Längsschnitt durch einen Verpreßanker 1, der aus einem Stahlzugglied 2, z.B. einem Bündel aus Stahldrahtlitzen besteht, das in ein Bohrloch 3 eingesetzt ist. Im unteren Teil des Bohrloches 3 ist durch Einpressen von erhärtendem Material, z.B. Zementmörtel, ein Verpreßkörper 4 erzeugt. Im Verpreßkörper 4 ist das Zugglied 2 über einen Teil seiner Gesamtlänge, der sogenannten Verankerungslänge Lᵥ, verankert. Über den restlichen Teil seiner Gesamtlänge, der sogenannten freien Stahllänge L_{f}, ist das Zugglied frei dehnbar. Am luftseitigen Ende des Bohrloches 3 ist das Zugglied 2 zum Beispiel zur Sicherung einer Baugrubenwand mittels einer Verankerung 5 verankert.

Im Bereich des Überganges von der Verankerungslänge Lᵥ zur freien Stahllänge L_{f} befindet sich der Abschnitt A des Zuggliedes 2, der vor dem Einbau zum Erzeugen einer Sollbruchstelle 6 einer Wärmebehandlung unterzogen worden ist. Als vorteilhaft hat sich die Wärmebehandlung des Zugglieds 2 mittels Induktion erwiesen, da dadurch der Stahl über den gesamten Querschnitt ausreichend gleichmäßig erwärmt wird. Zur Erzeugung der Induktion vor dem Einbau des Ankers im Bohrloch dient dabei eine Spule, deren Windungen das Zugglied 2 über einen Abschnitt von etwa 10 cm umgreifen. Durch Beaufschlagen der Spule mit elektrischer Energie bei einer Frequenz von 100 bis 150 kHz und einer Betriebsdauer von 10 Sekunden bis 2 Minuten wird in dem Stahlzugglied 2 Wärme erzeugt. Auf diese Weise läßt sich die Temperatur im Stahl sehr genau steuern.

Das Kraft-Verlängerungs-Diagramm gemäß Fig. 2 ist das Ergebnis mehrerer Versuchsreihen an siebendrähtigen Spanndrahtlitzen 12,5 mm (0,5") aus kaltverfestigtem Stahl St 1640/1770. Die einzelnen Litzen wurden jeweils mittels einer Induktionsspule örtlich erwärmt und nach Abkühlung bis zum Bruch belastet. Dabei hat sich gezeigt, daß im Bereich der induktiven Erwärmung bis zu einer bestimmten Temperatur die Litze ohne Traglastminderung gebrochen ist und jeweils nur in Abhängigkeit von der erzielten höheren Temperatur der Bruch bei einer entsprechend geringeren Last und nach geringerer Verlängerung des Zugglieds eintritt.

Es hat sich gezeigt, daß bis zu einer Temperatur von etwa 350 Grad C Erwärmung das Zugglied 2 noch die volle Tragkraft des Ankers 1 erreicht. Der Bruch tritt jeweils dadurch ein, daß das Zugglied 2 an der wärmebehandelten Stelle durch die infolge der Wärmebehandlung eintretende Kristallerholung eine größere Duktilität erfährt, so daß sich die für die Einleitung des Bruches verantwortliche Einschnürung an dieser Stelle lokalisiert. Da der wärmebehandelte Abschnitt A des Zugglieds kurz ist im Vergleich zu seiner Länge, spielt das dort durch die erfindungsgemäße Behandlung erzeugte unterschiedliche Dehnungsverhalten bezogen auf die Gesamtlänge des Zugglieds keine Rolle.

Während die Bruchlast bis zu einer Temperatur von 350 Grad C praktisch gleich bleibt, nimmt sie bei Temperaturen über 350 Grad C stetig ab. Für die Praxis ist somit der Temperaturbereich von 300 Grad C bis 500 Grad C, allenfalls bis 550 Grad C von Bedeutung, da hier ein Versagen des Ankers 1 bei überschreiten der Gebrauchslast erst nach überschreiten der ursprünglichen Elastizitätsgrenze auftritt. Der Bruch kündigt sich hier also auf jeden Fall durch eine plastische Verlängerung des Ankers 1 an.

## Patentansprüche

1. Verfahren zum Erzeugen einer Sollbruchstelle an einer vorbestimmten Stelle eines Zugglieds für einen Verpreßanker aus kaltverfestigtem oder einem nicht im thermodynamischen Gleichgewicht stehenden Stahl, z.B. eines Drahtes oder einer Stahldrahtlitze, zum Ausbauen der freien Stahllänge nach Gebrauch durch Aufbringen einer die Gebrauchslast übersteigenden Zugkraft, dadurch gekennzeichnet, daß das Stahlzugglied (2) vor seinem Einbau an der vorgesehenen Trennstelle (A) einer kontrollierten Erwärmung auf eine Temperatur ausgesetzt wird, bei der die Kaltverfestigung oder das thermodynamische Ungleichgewicht zumindest teilweise aufgehoben werden.

2. Verfahren nach Anspruch 1, dadurch gekennzeichnet, daß das Stahlzugglied (2) auf eine Temperatur etwa zwischen 200 und 800 Grad C erwärmt wird.

3. Verfahren nach Anspruch 2, dadurch gekennzeichnet, daß bei kaltverfestigten Stählen das Stahlzugglied (2) auf eine Temperatur etwa zwischen 200 und 600 Grad C erwärmt wird.

4. Verfahren nach Anspruch 2, dadurch gekennzeichnet, daß bei nicht im thermodynamischen Gleichgewicht stehenden Stählen das Stahlzugglied (2) auf eine Temperatur etwa zwischen 600 Grad und 800 Grad C erwärmt wird.

5. Verfahren nach einem der Ansprüche 1 bis 4, dadurch gekennzeichnet, daß die Erwärmung mittels Induktion erfolgt.

6. Verfahren nach Anspruch 5, dadurch gekennzeichnet, daß die Erwärmung infolge Induktion mittels einer das Zugglied (2) umgreifenden Spule erzeugt wird.

7. Verfahren nach einem der Ansprüche 1 bis 4, dadurch gekennzeichnet, daß die Wärmebehandlung durch eine Flamme erfolgt.

8. Verfahren nach einem der Ansprüche 1 bis 4, dadurch gekennzeichnet, daß die Wärmebehandlung durch einen heißen Gasstrahl erfolgt.

9. Verfahren nach einem der Ansprüche 1 bis 4, dadurch gekennzeichnet, daß die Wärmebehandlung durch Eintauchen in eine heiße Flüssigkeit erfolgt.

10. Verfahren nach einem der Ansprüche 1 bis 4, dadurch gekennzeichnet, daß die Wärmebehandlung durch Ablauf einer exothermen chemischen Reaktion erfolgt.

11. Gemäß dem Verfahren nach Anspruch 1 herstellbares Zugglied (2) mit einer vorgegebenen Sollbruchstelle (6), dadurch gekennzeichnet, daß die Bruchlast des Zugglieds (2) an der vorgesehenen Trennstelle nach der Wärmeeinwirkung gleich oder geringer ist als die Bruchlast vor der Wärmeeinwirkung, aber größer als die Elastizitätsgrenze des unbehandelten Zugglieds (2).

## Claims

1. A method of producing a predetermined breaking point at a predetermined location of a tension member for a pressure-grouted anchor consisting of work-hardened steel or a steel which is not in thermodynamic balance, for example a wire or a steel wire strand, for removing the free steel length after use by applying a tensile force exceeding the working load, characterised in that before its installation at the intended separation point (A) the steel tension member (2) is exposed to controlled heating to a temperature at which the work hardening or the thermodynamic imbalance is at least partly neutralised.

2. A method according to Claim 1, characterised in that the steel tension member (2) is heated to a temperature of approximately between 200 and 800 degrees C.

3. A method according to Claim 2, characterised in that in the case of work-hardened steels the steel tension member (2) is heated to a temperature of approximately between 200 and 600 degrees C.

4. A method according to Claim 2, characterised in that in the case of steels not in thermodynamic balance the steel tension member (2) is heated to a temperature of approximately between 600 and 800 degrees C.

5. A method according to any one of Claims 1 to 4, characterised in that the heating is carried out by induction.

6. A method according to Claim 5, characterised in that the heating is carried out by induction using a coil embracing the tension member (2).

7. A method according to any one of Claims 1 to 4, with characterised in that the heat treatment is effected by a flame.

8. A method according to any one of Claims 1 to 4, characterised in that the heat treatment is carried out by a hot gas jet.

9. A method according to any one of Claims 1 to 4, characterised in that the heat treatment is effected by immersion in a hot liquid.

10. A method according to any one of Claims 1 to 4, characterised in that the heat treatment is carried by the completion of an exothermic chemical reaction.

11. A tension member (2) with a predetermined breaking point, which can produced in accordance with the method according to Claim 1, characterised in that the breaking load of the tension member (2) at the intended separation point after the heat action is equal to or lower than the breaking load before the heat action but greater than the limit of elasticity of the untreated tension member (2).

## Revendications

1. Procédé pour générer un point de rupture théorique à un endroit prédéfini d'un organe de traction pour un ancrage à boulon de scellement à base d'acier écroui ou d'un acier qui n'est pas en équilibre thermodynamique, par exemple d'un fil ou d'un toron de fil d'acier, pour aménager la longueur d'acier libre après usage en appliquant une force de traction dépassant la charge utile, caractérisé en ce que l'organe de traction en acier (2) est exposé avant son montage, au point de coupure (A) prévu, à un réchauffement contrôlé jusqu'à une température à laquelle l'écrouissage ou le déséquilibre thermodynamique est supprimé au moins partiellement.

2. Procédé selon la revendication 1, caractérisé en ce que l'organe de traction en acier (2) est réchauffé à une température comprise entre 200 et 800° C environ.

3. Procédé selon la revendication 2, caractérisé en ce que, avec des aciers écrouis, l'organe de traction en acier (2) est réchauffé à une température comprise entre 200 et 600° C environ.

4. Procédé selon la revendication 2, caractérisé en ce que, dans le cas d'aciers qui ne sont pas en équilibre thermodynamique, l'organe de traction en acier (2) est réchauffé à une température comprise entre 600 et 800° C environ.

5. Procédé selon l'une quelconque des revendications 1 à 4, caractérisé en ce que le réchauffement est effectué par induction.

6. Procédé selon la revendication 5, caractérisé en ce que le réchauffement est produit par induction au moyen d'une bobine entourant l'organe de traction (2).

7. Procédé selon l'une quelconque des revendications 1 à 4, caractérisé en ce que le traitement thermique est effectué par une flamme.

8. Procédé selon l'une quelconque des revendications 1 à 4, caractérisé en ce que le traitement thermique est effectué par un jet de gaz chaud.

9. Procédé selon l'une quelconque des revendications 1 à 4, caractérisé en ce que le traitement thermique est effectué par immersion dans un liquide très chaud.

10. Procédé selon l'une quelconque des revendications 1 à 4, caractérisé en ce que le traitement thermique est effectué par le processus d'une réaction chimique exothermique.

11. organe de traction (2) pouvant être fabriqué conformément au procédé selon la revendication 1 avec un point de rupture théorique (6) prédéfini, caractérisé en ce que la charge de rupture de l'organe de traction (2) au point de coupure prévu, après l'effet de la chaleur, est identique ou inférieure à la charge de rupture avant l'effet de la chaleur, mais supérieure à la limite d'élasticité de l'organe de traction (2) non traité.
